# FASCICULE DE BREVET EUROPEEN

(11) **EP 0 384 830 B1**
(45) Date de publication et mention de la délivrance du brevet: **15.09.1993**
(21) Numéro de dépôt: 90400463.7
(22) Date de dépôt: 20.02.1990
(51) Int. Cl.: A01F 12/44

(54) **Dispositif de séparation secondaire de grain pour moissonneuse batteuse**
Sekundär-Korntrennvorrichtung bei Mähdrescher
Secondary separating device for crop on combine harvesters

(30) Priorité: 20.02.1989 FR 8902197
(43) Date de publication de la demande: 29.08.1990
(73) Titulaire: Zachary, Alain, F-08400 Vouziers (FR)
(72) Inventeur: Zachary, Alain, F-08400 Vouziers (FR)
(74) Mandataire: Clanet, Denis

(56) Documents cités:
- CH-A- 111 731
- DE-C- 767 207
- FR-A- 2 208 275

## Description

L'invention concerne un dispositif de séparation secondaire de grain pour moissonneuse-batteuse.

Les moissonneuses-batteuses comportent en général des dispositifs de séparation secondaire, à tables et grilles oscillantes, qui contribuent à rendre ces machines complexes. De plus, dans les moissonneuses-batteuses à tables et grilles oscillantes, il est impératif que les tables et grilles grâce auxquelles s'effectue la séparation secondaire soient montées sur des dispositifs correcteurs d'inclinaison. En effet, le rendement de ces tables diminue fortement lorsque les moissonneuses-batteuses progressent sur des terrains en dévers.

Ces contraintes augmentent notablement le coût de ces machines.

Le CH-A-111731 décrit déjà un dispositif de séparation secondaire de grain, qui peut être utilisé pour une moissonneuse-batteuse, comprenant un tambour extérieur rotatif d'axe horizontal formé, depuis une extrémité amont jusqu'à une extrémité aval, de trois tronçons successifs ajourés suivant des calibres différents, une goulotte d'alimentation en matière située à l'extrémité amont du tambour extérieur destinée à déverser des matières à l'intérieur et sensiblement suivant une tangente verticale du tambour extérieur et une volute de réception entourant au moins partiellement le tambour extérieur, comportant une ou plusieurs cloisons radiales parallèles définissant des canaux de réception en regard des tronçons successifs du tambour extérieur.

La présente invention concerne un dispositif de séparation secondaire du grain pour moissonneuse-batteuse, comportant un tambour extérieur rotatif d'axe horizontal formé, depuis une extrémité amont jusqu'à une extrémité aval, d'au moins trois tronçons successifs ajourés suivant des calibres différents, une goulotte d'alimentation en matières située à l'extrémité amont du tambour extérieur destinée à déverser des matières à l'intérieur et sensiblement suivant une tangente verticale du tambour extérieur, et une volute de réception entourant au moins partiellement le tambour extérieur, comportant une ou plusieurs cloisons radiales parallèles définissant des canaux de réception en regard des tronçons successifs du tambour extérieur, caractérisé en ce qu'il comporte en outre au moins un flanc incurvé situé à l'intérieur du tambour extérieur depuis la goulotte d'alimentation jusqu'à la zone inférieure du tambour extérieur et définissant avec le tambour extérieur un intervalle annulaire de réception de matières, une pluralité d'ailettes déflectrices en saillie à l'intérieur du tambour extérieur et inclinées par rapport à l'axe du tambour.

Les détails et avantages de l'invention apparaîtront clairement à la lecture de la description qui va suivre, en se référant aux dessins annexés, dans lesquels :
- la figure 1 est une vue en perspective schématique d'un séparateur conforme à l'invention
- la figure 2 est une vue en coupe axiale verticale schématique du séparateur, et
- la figure 3 est une vue en perspective et en coupe au niveau de la goulotte d'alimentation et du plénum de soufflage d'air, suivant la flèche F à la figure 1.

Le séparateur secondaire 10 selon la présente invention comprend un tambour extérieur 12 d'axe horizontal et un flanc incurvé coaxial (14) à l'interieur du tambour, définissant entre eux un intervalle annulaire 16 de réception de matières à séparer.

Le flanc incurvé 14 a une paroi pleine, tandis que le tambour extérieur 12 est ajouré, de manière à former un tamis.

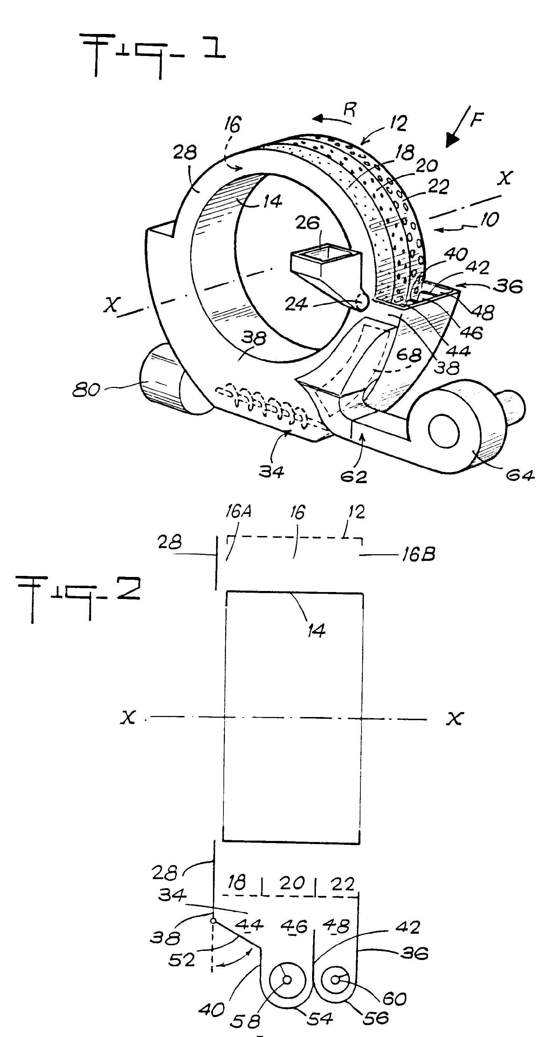

Plus précisément, le tambour extérieur est formé de trois tronçons successifs 18, 20, 22 formant des tamis de calibres croissants. Le premier tamis 18, à gauche à la figure 1 du côté amont, a un calibre relativement faible, et est destiné à laisser passer essentiellement les fragments de terre, petites pierres et autres débris de très petite taille.

Le second tamis 20, au centre, a un calibre correspondant au calibre des grains de la récolte considérée, et le troisième tamis à droite, du côté aval, a un calibre plus élevé correspondant à la taille habituelle des otons, c'est-à-dire des fragments d'épis portant encore plusieurs grains non séparés dans le batteur et le séparateur primaire.

L'alimentation en matière à séparer est assurée au moyen d'une goulotte 24 fixée à la base d'une trémie 26, débouchant vers l'intervalle annulaire 16 compris entre les deux tambours, du côté amont et sensiblement dans une zone où la tangente au tambour 12 et le flanc incurvé 14 est verticale.

L'extrémité amont de l'intervalle annulaire 16 est pratiquement obturée au moyen d'une plaque annulaire 28 de fermeture, tandis que son extrémité aval est ouverte, grâce à quoi les matières introduites du côté amont ne peuvent s'échapper qu'en traversant les tamis ou en empruntant l'extrémité aval. De plus, comme on le verra par la suite, cette disposition impose que tout écoulement d'air forcé depuis l'extérieur du tambour ne puisse s'échapper que par l'extrémité aval de l'intervalle.

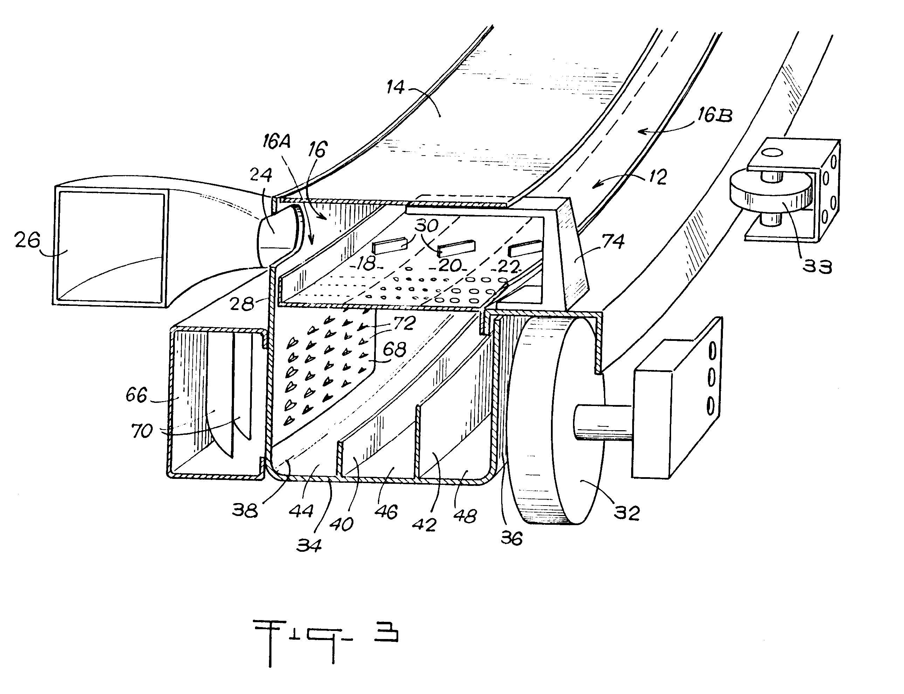

Comme on le remarque à la figure 3, une pluralité d'ailettes déflectrices 30 sont fixées en saillie à l'intérieur du tambour extérieur 12 et inclinées sensiblement en hélice par rapport à l'axe X-X du tambour.

Le sens d'inclinaison des ailettes 30 est tel que lors de la rotation du tambour, dans la direction indiquée par la flèche R à la figure 1, les matières sont progressivement entraînées de l'extrémité amont 16A à l'extrémité aval 16B de l'intervalle annulaire 16.

Compte tenu de son grand diamètre, le tambour 12 est maintenu et entraîné en rotation par des galets 32 disposés à sa périphérie, de préférence au nombre de trois, deux des galets servent simplement de support et de guide, tandis que le troisième sert également à l'entraînement du tambour, au moyen d'un moteur entraînant le galet. Il peut également être prévu des galets de maintien axial 33 du tambour.

Autour du tambour extérieur 12 est disposée une volute 34 réceptrice, destinée à recueillir séparément les matières traversant les trois tronçons 18, 20, 22 du tambour 12.

La volute a une section en forme de U, dont les deux parois latérales 36, 38 sont sensiblement perpendiculaires au tambour 12 et se terminent à courte distance de celui-ci.

Deux cloisons radiales intermédiaires 40, 42 s'étendent parallèlement aux parois latérales 36, 38 depuis la base du U, en direction du tambour et jusqu'à une certaine distance de celui-ci, de manière à définir trois canaux de réception 44, 46, 48 parallèles, en regard de chacun des trois tronçons 18, 20, 22 du tambour 12.

Dans la mesure où le premier canal 44 est destiné à recevoir des matières non utilisables, il est ouvert à sa partie inférieure 50, afin de laisser tomber ces matières sur le terrain.

Le canal de réception central 46 se termine en partie basse par une auge 54 équipée d'une vis d'Archimède destinée à évacuer le grain propre vers une trémie non représentée.

Le canal de réception aval 48 se termine en partie basse par une auge 56 equipée également d'une vis d'Archimède 60 destinée à transférer les otons vers un batteur à otons 80.

En variante, pour la récolte des produits à grains de très petite taille, notamment le colza, le premier canal 44 peut être mis en communication en partie inférieure avec le second 46, en particulier grâce à un volet 52 articulé.

On remarque en effet que les graines de colza sont situées sur les pieds à une hauteur dépassant généralement 15 centimères, ce qui permet de régler la barre de coupe à une hauteur telle que l'on évite des entraînements de terre.

S'agissant de récolte de colza, qui ne produit pas d'otons, on pourrait se passer d'une troisième section 22 de tambour. En pratique, dans le but de réaliser des machines polyvalentes, on prévoira trois sections dans toutes les machines et le grain recueilli dans le troisième canal 48 sera rassemblé avec le grain recueilli dans le second pour être envoyé vers la trémie de stockage lors de la récolte de colza, le batteur à otons étant alors court-circuité et si nécessaire mis à l'arrêt afin de ne pas entraîner des organes inutiles et réduire la consommation en carburant.

Un agencement approprié de volets en partie inférieure des canaux de réception de la volute permet donc d'isoler les canaux ou de les mettre en communication mutuelle, ou encore de les mettre en communication avec l'extérieur.

Le séparateur comporte enfin un circuit de séparation pneumatique 62 destiné à maintenir un flux d'air d'entraînement des déchets de faible densité :
Ce circuit comprend un ventilateur 64 refoulant l'air vers un plénum 66 accolé à un orifice latéral 68 de la volute de réception 34 ménagé sur la paroi extérieure 38 bordant le premier canal et au-dessous de la goulotte d'alimentation 24 en grains. Le plénum 66 en amont de l'orifice 68 est équipé d'aubes directrices 70 qui dirigent le flux d'air sensiblement parallèlement à l'axe du tambour, tandis que l'orifice 68 est équipé d'ailettes déflectrices 72 qui dévient le flux en direction de la surface extérieure du tambour 12.

Grâce à ces dispositions, l'air soufflé du plénum 66 vers la volute 34 traverse les multiples trous du tambour 12, de l'extérieur vers l'intérieur, à contre-sens des matières qui traversent le tamis vers la volute, puis s'écoule dans l'intervalle 16 séparant le tambour extérieur 12 du flanc incurvé 14, depuis l'extrémité amont 16A vers l'extrémité aval 16b, en entraînant les matières légères, comme les poussières, la balle ou les menus fragments de paille, qui sont donc éjectées par cette extrémité aval et retombent naturellement sur le terrain.

Il convient de noter que la séparation est rendue très efficace par le fait que le mélange de grains et d'impuretés est soumis au flux d'air durant sa chute à partir de la goulotte 24 jusqu'au tambour rotatif 12. Le sens de rotation du tambour a par ailleurs été choisi pour assurer un effet de brassage augmentant l'efficacité du séparateur.

L'invention ainsi décrite peut faire l'objet de diverses variantes, comme exposé ci-après.

Lorsque la machine comporte un tambour de séparation primaire, comme décrit par exemple dans le document FR-A-2 382 847 ou encore dans la demande FR-A-2637769, on associera avantageusement le tambour de séparation secondaire au tambour de séparation primaire.

A cet effet, le tambour primaire comportera à son extrémité aval une section non ajourée qui constituera le tambour intérieur du séparateur secondaire, et autour duquel sera monté le tambour ajouré du séparateur secondaire.

Avantageusement, le tambour de séparateur primaire comportera plusieurs supports 74 régulièrement espacés à sa périphérie, destinés à recevoir des secteurs cylindriques de grille calibrées constituant ensemble les tronçons successifs 18, 20, 22 du tambour extérieur 12 de séparateur secondaire.

Ces secteurs seront ainsi facilement démontables et remplaçables par des secteurs ajourés suivant des calibres différents selon la nature de la récolte envisagée.

En variante, le tambour extérieur 12 sera ajouré selon un calibre variable et il sera prévu pour les trois tronçons successifs 18, 20, 22 des grilles réglables afin d'obturer plus ou moins les ouvertures du tambour extérieur en vue d'obtenir des tamis de calibres choisis et réglables à la demande.

Il est possible de prévoir que les grilles soient planes, ce qui signifie que la section du tambour de séparation devient un polygone régulier, ayant autant de côtés que de grilles. Un dispositif non représenté permet dans tous les cas un réglage de l'ensemble des grilles élémentaires par une commande unique.

Que le tambour secondaire soit associé à un tambour de séparateur primaire ou indépendant, on pourra conférer au tambour intérieur et/ou au tambour extérieur une certaine cônicité, afin d'éviter des colmatages de matières sur la face intérieure du tambour extérieur.

A cet effet, le tambour intérieur 14 aura une forme troncônique s'amincissant en direction de l'extrémité aval, et/ou le tambour extérieur 12 aura une forme troncônique s'évasant vers l'extrémité aval.

Selon les résultats obtenus aux essais, on pourra le cas échéant laisser ouverte l'extrémité amont 16A de l'intervalle 16 séparant le tambour 12 du flanc incurvé 14. En effet, dans la mesure où l'air soufflé dans la volute 34 et traversant ensuite les passages du tambour extérieur 12 à une direction générale orientée depuis l'extrémité amont 16A vers l'extrémité aval 16B, on pourra être assuré que l'échappement de l'air s'effectue par l'extrémité aval 16B, en bénéficiant même dans certaines conditions d'un effet d'induction aspirant un flux d'air secondaire depuis l'extrémité amont 16A.

Lorsque le tambour de séparation secondaire n'est pas associé à un tambour de séparation primaire, le flanc incurvé 14 pourra se limiter à une flanc incurvé fixe, face au tambour extérieur dans une zone s'étendant depuis la goulotte d'alimentation 24 jusqu 'à la zone inférieure du tambour, ou encore légèrement au delà.

Ce qui importe en effet est que les matières s'écoulant de la goulotte d'alimentation traversent un courant d'air de balayage sensiblement horizontal dans la zone qu'elles parcourent initialement en chute libre avant de tomber sur la paroi intérieure du tambour.

## Revendications

1. Dispositif de séparation secondaire de grain pour moissonneuse-batteuse, comportant un tambour extérieur (12) rotatif d'axe horizontal formé, depuis une extrémité amont jusqu'à une extrémité aval, d'au moins trois tronçons (18,20,22) successifs ajourés suivant des calibres différents, une goulotte (24) d'alimentation en matière située à l'extrémité amont du tambour extérieur destinée à déverser des matières à l'intérieur et sensiblement suivant une tangente verticale du tambour extérieur et une volute de réception (34) entourant au moins partiellement le tambour extérieur, comportant une ou plusieurs cloisons radiales (40,42) parallèles définissant des canaux de réception (44,46,48) en regard des tronçons successifs du tambour extérieur, caractérisé en ce qu'il comporte en outre au moins un flanc incurvé (14) situé à l'intérieur du tambour extérieur depuis la goulotte d'alimentation jusqu'à la zone inférieure du tambour extérieur et définissant avec le tambour extérieur un intervalle annulaire (16) de réception de matières, une pluralité d'ailettes déflectrices (30) en saillie à l'intérieur du tambour extérieur et inclinées par rapport à l'axe du tambour.

2. Dispositif selon la revendication 1, caractérisé en ce qu'il comprend également un dispositif de séparation pneumatique (62) soufflant de l'air dans la volute de réception (34) et à travers le tambour extérieur (12), depuis l'extérieur de celui-ci vers l'intervalle annulaire (16) de réception des matières, dans une direction sensiblement parallèle à l'axe du tambour depuis son extrémité amont vers son extrémité aval.

3. Dispositif selon la revendication 2, caractérisé en ce que le flanc incurvé consiste en un contre-tambour intérieur (14) coaxial au tambour extérieur et solidaire de celui-ci.

4. Dispositif selon la revendication 3, caractérisé en ce que le tambour extérieur est constitué de secteurs de grilles cylindriques démontables, montés sur des supports (74) fixés au tambour intérieur.

5. Dispositif selon l'une des revendication 3 ou 4, caractérisé en ce que l'un des tambours au moins est légèrement cônique.

6. Dispositif selon l'une quelconque des revendications 3 à 5, caractérisé en ce que le tambour intérieur est formé par un tambour de séparateur primaire.

7. Dispositif selon l'une quelconque des revendications 3 à 6, caractérisé en ce que les tambours intérieur et extérieur sont supportés par des galets (32,33)régulièrement espacés à leur périphérie et entraînés par l'un au moins desdits galets.

8. Dispositif selon l'une quelconque des revendications 3 à 7, caractérisé en ce qu'il comporte une plaque annulaire (28) de fermeture entre le tambour intérieur et le tambour extérieur à l'extrémité amont de ce dernier.

9. Dispositif selon l'une quelconque des revendications 3 à 8, caractérisé en ce que le dispositif de séparation aéraulique (62) comporte un plénum (66) de soufflage d'air accolé à la volute (34), débouchant dans celle-ci par un orifice de soufflage (68) situé au-dessous de la goulotte (24) d'alimentation, et équipé d'aubes (66) et d'ailettes (72) directrices dirigeant le flux d'air en direction de la surface extérieure du tambour extérieur et sensiblement parallèlement à l'axe de celui-ci.

10. Dispositif selon l'une quelconque des revendications 1 à 9, caractérisé en ce que la volute de réception (34) comporte des organes d'extraction (58,60) de grain en partie inférieure de chaque canal de réception.

11. Dispositif selon l'une quelconque des revendications 1 à 10, caractérisé en ce que la volute de réception comprend des volets (52) assurant l'isolement ou la mise en communication des canaux entre eux et avec l'extérieur.

12. Dispositif selon l'une quelconque des revendications 1 à 11, caractérisé en ce que les tronçons de tambour extérieur ont un calibre réglable.

## Patentansprüche

1. Vorrichtung zur sekundären Abtrennung von Korn für einen Mähdrescher, umfassend eine äußere Drehtrommel (12) mit horizontaler Achse, die von einem stromaufwärtigen Ende bis zu einem stromabwärtigen Ende von mindestens drei aufeinanderfolgenden Abschnitten (18, 20, 22), die mit Löchern von unterschiedlichem Duchmesser versehen sind, gebildet wird, eine Schurre (24) zum Einfüllen des Guts, die sich am stromaufwärtigen Ende der äußeren Trommel befindet und dafür vorgesehen ist, das Gut einzuschütten, und zwar im wesentlichen entlang einer vertikalen Tangente der äußeren Trommel, eine Aufnahmeschnecke (34), die zumindest teilweise die äußere Trommel umgibt, und ein oder mehrere parallele radiale Trennwände (40, 42), welche Aufnahmekanäle (44, 46, 48) definieren, die den aufeinanderfolgenden Abschnitten der äußeren Trommel gegenüberliegen, dadurch gekennzeichnet, daß sie außerdem mindestens eine gebogene Flanke (14), die sich innerhalb der äußeren Trommel von der Einfüllschurre bis zum unteren Bereich der äußeren Trommel erstreckt und mit der äußeren Trommel einen ringförmigen Zwischenraum (16) zur Aufnahme des Guts definiert, sowie eine Vielzahl von Ablenkflügeln (30), die in das Innere der äußeren Trommel vorspringen und in bezug auf die Achse der Trommel schräg angeordnet sind, umfaßt.

2. Vorrichtung nach Anspruch 1, dadurch gekennzeichnet, daß sie ferner eine pneumatische Trennvorrichtung (62) umfaßt, welche in die Aufnahmeschnecke (34) und quer durch die äußere Trommel (12) Luft bläst, und zwar von der Außenseite derselben her zum ringförmigen Zwischenraum (16) hin, welcher der Aufnahme des Guts dient, und in eine zur Achse der Trommel im wesentlichen parallele Richtung von dem stromaufwärtigen Ende der Trommel bis zu ihrem stromabwärtigen Ende.

3. Vorrichtung nach Anspruch 2, dadurch gekennzeichnet, daß die gebogene Flanke aus einer inneren Gegentrommel (14) besteht, die in bezug auf die äußere Trommel koaxial angeordnet und mit dieser fest verbunden ist.

4. Vorrichtung nach Anspruch 3, dadurch gekennzeichnet, daß die äußere Trommel aus abnehmbaren zylindrischen Siebsegmenten besteht, die auf Trägern (74) montiert sind, welche an der inneren Trommel befestigt sind.

5. Vorrichtung nach einem der Ansprüche 3 oder 4, dadurch gekennzeichnet, daß mindestens eine der Trommeln leicht konisch ist.

6. Vorrichtung nach irgendeinem der Ansprüche 3 bis 5, dadurch gekennzeichnet, daß die innere Trommel von einer Trommel einer primären Trenneinrichtung gebildet wird.

7. Vorrichtung nach irgendeinem der Ansprüche 3 bis 6, dadurch gekennzeichnet, daß die Trommeln, die innere und die äußere, von an ihrem Umfang in gleichmäßigen Abständen angeordneten Rollen (32, 33) gehalten und von mindestens einer dieser Rollen angetrieben werden.

8. Vorrichtung nach irgendeinem der Ansprüche 3 bis 7, dadurch gekennzeichnet, daß sie zwischen der inneren und der äußeren Trommel und am stromaufwärtigen Ende dieser letzteren eine ringförmige Abschlußplatte (28) aufweist.

9. Vorrichtung nach irgendeinem der Ansprüche 3 bis 8, dadurch gekennzeichnet, daß die pneumatische Trennvorrichtung (62) einen Sammelraum (66) zum Einblasen von Luft umfaßt, der an die Schnecke (34) angrenzt und in diese durch eine Blasöffnung (68) einmündet, welche sich unterhalb der Einfüllschurre (24) befindet, und der mit Leitschaufeln (66) und Leitflügeln (72) versehen ist, welche den Luftstrom in Richtung der äußeren Oberfläche der äußeren Trommel und im wesentlichen parallel zu deren Achse leiten.

10. Vorrichtung nach irgendeinem der Ansprüche 1 bis 9, dadurch gekennzeichnet, daß die Aufnahmeschnecke (34) im unteren Teil eines jeden Aufnahmekanals Förderorgane (58, 60) für das Korn enthält.

11. Vorrichtung nach irgendeinem der Ansprüche 1 bis 10, dadurch gekennzeichnet, daß die Aufnahmeschnecke Klappen (52) aufweist, welche die Trennung oder die Verbindung der Kanäle untereinander und mit dem Äußeren gewährleisten.

12. Vorrichtung nach irgendeinem der Ansprüche 1 bis 11, dadurch gekennzeichnet, daß die Abschnitte der äußeren Trommel einen einstellbaren Lochdurchmesser besitzen.

## Claims

1. Device for secondary separation of grain in a combine harvester, comprising a rotary outer drum (12) having a horizontal axis which comprises, from an upstream end to a downstream end, at least three successive perforated lengths (18, 20, 22) having different mesh sizes, a feed chute (24) situated at the upstream end of the outer drum for pouring substances into the drum substantially along a vertical tangent to the outer drum and a collecting volute (34) surrounding at least a portion of the outer drum, including one or more parallel radially-directed partitions (40, 42) defining collection channels (44, 46, 48) facing the successive lengths of the outer drum, characterized in that it further includes at least one curved wall (14) situated inside the outer drum running from the feed chute down to a bottom zone of the outer drum and defining, together with the outer drum, an annular gap (16) for collecting substances, a plurality of deflector fins (30) projecting radially inward from the outer drum, and inclined relative to the drum axis.

2. Device according to claim 1, characterized in that it also includes a pneumatic separator device (62) blowing air into the collecting volute (34) and through the outer drum (12), from the outside of the latter into the annular gap (16) for collecting substances, in a direction substantially parallel to the axis of the drum from the upstream end of the drum towards its downstream end.

3. Device according to claim 2, characterized in that the curved wall consists in an inner counter-drum (14) coaxial with the outer drum and fixed thereto.

4. Device according to claim 3, characterized in that the outer drum is constituted by removable cylindrical sectors of grids, mounted on supports (74) fixed to the inner drum.

5. Device according to one of claims 3 or 4, characterized in that at least one of the drums is slightly conical.

6. Device according to any one of claims 3 to 5, characterized in that the inner drum is formed by a primary separator drum.

7. Device according to any one of claims 3 to 6, characterized in that the inner and outer drums are supported by wheels (32, 33) regularly spaced apart around their peripheries and driven by at least one of said wheels.

8. Device according to any one of claims 3 to 7, characterized in that it includes an annular closure plate (28) between the inner drum and the outer drum, at the upstream end of the outer drum.

9. Device according to any one of claims 3 to 8, characterized in that the blower separator device (62) comprises a plenum chamber (66) for blowing air which is adjacent the volute (34) and which opens out into the volute via a blowing orifice (68) situated beneath the feed chute (24), and fitted with air flow directing vanes (66) and fins (72) for directing the flow of air towards the outside surface of the outer drum, and substantially parallel to the axis thereof.

10. Device according to any one of claims 1 to 9, characterized in that the collecting volute (34) includes grain extracting members (58, 60) at the bottom of each of its collecting channels.

11. Device according to any one of claims 1 to 10, characterized in that the collecting volute includes flaps (52) for isolating the channels from or putting them into communication with one another and the outside.

12. Device according to any one of claims 1 to 11, characterized in that the lengths of the outer drum have adjustable mesh sizes.
